# EUROPEAN PATENT SPECIFICATION

(11) **EP 4 371 727 B1**
(45) Date of publication and mention of the grant of the patent: **11.03.2026**
(21) Application number: 23210374.7
(22) Date of filing: 16.11.2023
(51) Int. Cl.: B29C 44/34, B29D 35/00, B29C 64/00, B29D 35/12, B33Y 80/00, A43B 13/18

(54) **METHOD FOR PRODUCING RESIN FOAM PRODUCT, RESIN FOAM PRODUCT, AND SHOE INCLUDING RESIN FOAM PRODUCT**
VERFAHREN ZUR HERSTELLUNG EINES HARZSCHAUMSTOFFPRODUKTS, HARZSCHAUMSTOFFPRODUKT UND SCHUH MIT EINEM HARZSCHAUMSTOFFPRODUKT
PROCÉDÉ DE PRODUCTION D'UN PRODUIT EN MOUSSE DE RÉSINE, PRODUIT EN MOUSSE DE RÉSINE ET CHAUSSURE COMPRENANT UN PRODUIT EN MOUSSE DE RÉSINE

(30) Priority: 18.11.2022 JP 2022184844
(43) Date of publication of application: 22.05.2024
(73) Proprietor: ASICS Corporation, Kobe-shi, Hyogo 650-8555 (JP)
(72) Inventor: WAKASUGI, Shinsaku, Kobe-shi, Hyogo, 650-8555 (JP)
(74) Representative: TBK

(56) References cited:
- DE-A1- 102020 212 800
- US-A1- 2021 023 775
- US-A1- 2022 267 555
- US-A1- 2022 267 556
- US-B2- 10 357 904
- US-B2- 11 318 647
- US-B2- 9 688 828

## Description

### FIELD OF THE INVENTION

The present invention relates to, for example, a resin foam product disposed on, e.g., a bottom of a shoe for use, and a method for producing the resin foam product. Further, the present invention relates to a shoe including the resin foam product.

### BACKGROUND OF THE INVENTION

Various resin foam products are conventionally known. For example, known is a resin foam product obtained by curing a composition including a curable material and a foaming agent to form a resin structure, followed by foaming the resin structure.

Known as the resin foam product of this kind is specifically a resin foam product formed of an optical stereolithography resin composition including a photopolymerizable compound, a photopolymerization initiator, and a thermally expandable microcapsule (e.g., JP 6033850 B). The resin foam product disclosed in JP 6033850 B is obtained by irradiating the optical stereolithography resin composition with an active energy ray such as ultraviolet laser beams to form a solid shaped object, and further foaming the solid shaped object. The resin foam product disclosed in JP 6033850 B can easily collapse after foaming, and is thus used for, for example, applications such as a core.

US 10 357 904 B2 discloses a method of making a foamed article comprising (a) injection molding a molten thermoplastic elastomer to form a precursor; (b) crosslinking the thermoplastic elastomer; (c) heating the thermoplastic elastomer to a first temperature to soften the thermoplastic elastomer; (d) infusing the thermoplastic elastomer with at least one inert gas at a first pressure that is sufficient to cause the at least one inert gas to permeate into the softened thermoplastic elastomer; and (e) while the article is softened, reducing the pressure to a second pressure below the first pressure to at least partially foam the precursor into a foamed article, wherein the foamed article is substantially the same shape as the precursor.

### SUMMARY OF THE INVENTION

### Technical Problem

Demanded as the resin foam product is a resin foam product retaining its shape as desired even after foaming. Demanded examples of such a resin foam product include a resin foam product obtained by foaming a resin structure with an internal cavity, the resin foam product having a desired internal cavity even after the foaming. Further demanded is a method for producing such a resin foam product.

However, if a resin structure with an internal cavity is simply foamed, the internal cavity of the resin foam product after the foaming might not be formed as intended due to, for example, a foaming agent, which possibly results in the resin foam product without a desired internal cavity. In other words, such a simple foaming has a problem of being unable to form an internal cavity as designed inside the resin foam product.

Thus, demanded is a method for producing a resin foam product capable of obtaining a resin foam product with an internal cavity as designed. Further, demanded is a resin foam product produced by such a method.

In view of the above problems, demands, or the like, it is an object of the present invention to provide a method for producing a resin foam product capable of obtaining a resin foam product with an internal cavity as designed. It is another object of the present invention to provide a resin foam product with an internal cavity as designed. It is yet another object of the present invention to provide a shoe including the above resin foam product.

### Solution to Problem

In order to achieve the above objects, a method for producing a resin foam product according to the present invention is a method for producing a resin foam product with an internal cavity, the method including: a step of preparing a composition including a curable material and a foaming agent; a step of forming a resin structure with an internal cavity communicating with an outer space by curing the composition; a step of blowing a fluid to the resin structure; and a step of producing the resin foam product by foaming the resin structure with the fluid blown thereto.

A resin foam product according to the present invention is a resin foam product with an internal cavity, and the resin foam product is produced by a method of producing a resin foam product including: a step of preparing a composition including a curable material and a foaming agent; a step of forming a resin structure with an internal cavity communicating with an outer space by curing the composition; a step of blowing a fluid to the resin structure; and a step of producing the resin foam product by foaming the resin structure with the fluid blown thereto.

Advantageous further developments are defined in the dependent claims.

A shoe according to the present invention includes the above resin foam product.

### BRIEF DESCRIPTION OF DRAWINGS

Fig. 1 is a flowchart of a method for producing a resin foam product according to this embodiment.
Fig. 2 shows various examples of a constituent unit in the resin foam product or a resin structure according to this embodiment in a schematic manner.
Fig. 3 is a schematic view of an example of the resin foam product or the resin structure according to this embodiment.
Fig. 4 is a schematic view of another example of the resin foam product or the resin structure according to this embodiment.
Fig. 5 is a schematic view of still another example of the resin foam product or the resin structure according to this embodiment.
Fig. 6 is a schematic view of still another example of the resin foam product or the resin structure according to this embodiment.
Fig. 7 is a schematic view of an appearance of a shoe according to this embodiment.
Fig. 8 is a schematic cross-sectional view of an example of the resin foam product according to this embodiment disposed on a bottom of the shoe.
Fig. 9 shows an image of an internal cross section obtained by cutting a resin foam product produced using a 3D printer along its shaping direction (i.e., stacking direction of layered products), and an image of an internal cross section obtained by cutting the resin foam product in a direction perpendicular to the shaping direction (i.e., stacking direction of layered products).
Fig. 10 is a photograph of an appearance of a produced resin foam product as an example and an appearance of a produced resin foam product as a comparative example.

### DETAILED DESCRIPTION OF THE PREFERRED EMBODIMENT

A description will be hereinafter given on a method for producing a resin foam product according to this embodiment with reference to the drawings.

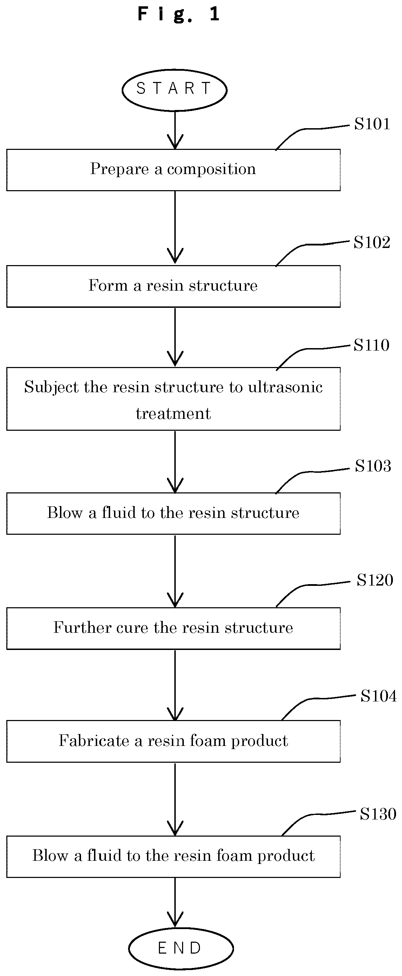

A method for producing a resin foam product of this embodiment is a method for producing a resin foam product with an internal cavity, the method including, as shown in, for example, Fig. 1: a step S101 of preparing a composition including a curable material and a foaming agent (hereinafter referred to also as composition preparing step); a step S102 of forming a resin structure 3 with an internal cavity communicating with an outer space by curing the composition (hereinafter referred to also as resin structure forming step); a step S103 of blowing a fluid to the resin structure 3 (hereinafter referred to also as first blowing step); and a step S104 of fabricating a resin foam product 5 by foaming the resin structure 3 with the fluid blown thereto

(hereinafter referred to also as resin foam product fabricating step). The resin foam product with the internal cavity as designed can be produced by the method for fabricating the resin foam product of this embodiment.

It is preferable that the method for producing the resin foam product of this embodiment further include: a step S110 of subjecting the resin structure 3 in a state of being immersed in a solvent to ultrasonic treatment (hereinafter referred to also as ultrasonic treatment step) between the step of forming the resin structure 3 and the step of blowing the fluid to the resin structure 3. It is preferable that the method for producing the resin foam product of this embodiment further include: a step S120 of further curing the resin structure 3 (hereinafter referred to also as secondary curing step) after the step of blowing the fluid to the resin structure 3 and before the step of fabricating the resin foam product 5. It is preferable that the method for producing the resin foam product of this embodiment further include: a step S130 of blowing a fluid to the resin foam product 5 (hereinafter referred to also as second blowing step) after the step of fabricating the resin foam product 5.

In the composition preparing step, the composition is prepared by mixing at least the curable material and the foaming agent together. A general mixing method is employed for the mixing. The composition can further include, for example, a polymerization initiator for promoting the initiation of curing reaction.

The curable material is an organic matter cured by a chemical reaction such as polymerization or crosslinking. The curable material can be, for example, a photocurable material cured by an active energy ray (to be discussed in detail later), or can be a thermosetting material cured by heating.

The curable material is preferably in a liquid form under ordinary temperature (e.g., 20 °C). The curable material in a liquid form can be a liquid with low viscosity, or a viscous liquid. The curable material being in a liquid form allows the composition including the curable material and the foaming agent to have fluidity under ordinary temperature.

Examples of the curable material include a low molecular weight organic matter having a reactive chemical structure in its molecule. Examples of the low molecular weight organic matter include a monomer, an oligomer, and a prepolymer. Examples of the reactive chemical structure include a multiple bond such as a double bond or a triple bond, or a reactive functional group such as an acryloyl group, an epoxy group, or an isocyanate group. The curable material can include one of these, or can include two or more of these.

Examples of the polymerizable monomer include a radically polymerizable monomer to be polymerized by a vinyl polymerization reaction. The polymerizable monomer can be a monomer to be polymerized by a cationic polymerization reaction or an anionic polymerization reaction.

Examples of the radically polymerizable monomer include styrene or a (meth)acrylic acid ester compound ((meth)acrylate).

Examples of the (meth)acrylate among the radically polymerizable monomers include a urethane (meth)acrylate. The urethane (meth)acrylate has a structure in which a plurality of (meth)acrylate monomers are bonded to each other by a urethane bond or an allophanate bond. Thus, the urethane (meth)acrylate includes, for example, a bifunctional monomer having two radically polymerizable groups, or a trifunctional monomer having three radically polymerizable groups.

The foaming agent includes at least a chemical foaming agent, a physical foaming agent, or the like. Examples of the chemical foaming agent include azodicarbonamide (ADCA), N'N-dinitropentamethylenetetramine (DPT), and 4,4'-oxybisbenzenesulfonylhydrazide (OBSH). Examples of the physical foaming agent include a hydrocarbon compound having a relatively low boiling point.

The foaming agent is preferably a thermally expandable foaming agent. The thermally expandable foaming agent includes the chemical foaming agent or the physical foaming agent, and thermoplastic resin capsules for encapsulating the foaming agent therein. The thermoplastic resin capsules preferably encapsulate the physical foaming agent (e.g., hydrocarbon compound) therein.

As the thermally expandable foaming agent, a commercially available product can be employed. Examples of the product include "Matsumoto Microsphere" (manufactured by Matsumoto Yushi-Seiyaku Co., Ltd), "EXPANCEL" (manufactured by Japan Fillite co., ltd.), "Advancell EM series" (Sekisui Chemical Company, Limited), and "Microsphere" (manufactured by KUREHA CORPORATION).

Examples of the polymerization initiator include a photopolymerization initiator or a thermopolymerization initiator. Examples of the photopolymerization initiator include a photoradical polymerization initiator such as an alkylphenon-based polymerization initiator, an acylphosphine oxide-based polymerization initiator, or an oxyphenyl acetic acid ester-based polymerization initiator. Examples of the photopolymerization initiator include a photocationic polymerization initiator such as an iodonium salt-based polymerization initiator, or a sulphonium salt-based polymerization initiator. Examples of the thermopolymerization initiator include an azoic compound such as azobisbutyronitrile, or benzoyl peroxide.

The polymerization initiator is preferably a photopolymerization initiator, in terms of being capable of relatively easily obtaining the resin structure 3 having a desired shape by curing the polymerizable monomer through the irradiation with the active energy ray (in particular laser irradiation).

The composition is preferably a composition in a liquid form under ordinary temperature including a liquid photocurable material.

The composition can further include a component other than those as aforementioned, without significantly impairing the effect of the present invention. For example, the composition can include, as appropriate, a hardness adjusting agent such as a paraffinic or naphthenic process oil, a tackifier such as a terpene resin, an aging retardant, a processing aid, an inorganic filler, a deodorizer, and a perfume.

In the resin structure forming step, the aforementioned composition is preferably cured by irradiating the composition with the active energy ray. Then, the resin structure 3 formed by being cured is obtained. The resin structure 3 has the internal cavity communicating with the outer space.

Examples of the active energy ray include electromagnetic waves such as a γ-ray, an X-ray, an ultraviolet ray, a visible ray, or an infrared ray. Further, examples of the active energy ray include particle beams such as an α-ray, a β-ray, an electron beam, a neutron beam, a proton beam, or a heavy particle beam.

A preferable active energy ray is the ultraviolet ray, the visible ray, or the infrared ray in terms of being highly safe. Further, the laser beam of the active energy ray is preferably irradiated on the composition in terms of being capable of irradiation with the active energy ray at a desired position.

In the resin structure forming step, a cavity communicating with the outer space is formed inside the resin structure 3. In terms of being capable of relatively easily fabricating the resin structure 3 with such an internal cavity, it is preferable that the resin structure 3 be fabricated using a so-called 3D printer. The 3D printer is a machine configured to shape a solid object based on a solid model constituted by a three-dimensional data generated using, for example, a three-dimensional CAD or a three-dimensional CG. In particular, it is preferable that a 3D printer capable of laser irradiation with the ultraviolet ray, the visible ray, or the infrared ray be used. Use of such a 3D printer can relatively easily and safely fabricate the resin structure 3 in a desired shape from the composition in a liquid form under ordinary temperature. Forming the resin structure 3 by the irradiation with the active energy ray using the 3D printer is hereinafter referred to also as "shaping" or "optical shaping".

In the resin structure forming step, a desired cavity as designed is formed inside the resin structure 3. The desired cavity formed inside the resin structure 3 is to reflect the shape of the cavity inside the resin foam product 5 formed by foaming the resin structure 3.

In the resin structure forming step, the resin structure 3 is fabricated so that a cavity is formed in each of outer surface portions on one side and the other side of the resin structure 3 with its center located therebetween, and at least a part of the cavity in the outer surface portion on the one side communicates with the cavity in the outer surface portion on the other side. This configuration enables cleaning of inner surfaces in the surface portions on both the one side and the other side of the resin structure 3 when a fluid is blown to the surface portion on the one side of the resin structure 3 in the subsequent first blowing step.

The shape of the resin structure 3 is not particularly limited, and can be, for example, a rectangular parallelepiped shape, a plate shape, a spherical shape, a columnar shape, a prism shape, a conical shape, or a pyramid shape. The shape of the resin structure 3 can be asymmetrical. It is preferable that the resin structure 3 in an asymmetrical shape be formed so that the cavities in the outer surface portions on the one side and the other side of the resin structure 3 with its center located therebetween communicate with each other. In the resin structure 3 in an asymmetrical shape (e.g., formed with an unevenness on the surface), the center of gravity of the resin structure 3 can be regarded as its center. It is more preferable that the resin structure 3 be fabricated in the resin structure forming step so that the cavity within the resin foam product entirely communicates with the outer space. Such a resin structure 3 can be fabricated using, for example, the aforementioned 3D printer.

In the resin structure forming step, use of the 3D printer can fabricate the resin structure 3 conforming to the solid model in a desired shape constituted by the three-dimensional data. For example, the resin structure 3 fabricated to conform to the solid model includes a plurality of constituent units U continuously arranged along at least one direction. Each of the constituent units U has a structure with a plurality of bar-shaped members or plate-shaped members combined together, or a structure with a curved surface continuously laid within the constituent unit. Each constituent unit U has a cavity between the plurality of bar-shaped members or plate-shaped members, or inside or outside the continuous curved surface. At least a part of the internal cavity of the resin foam product 5 is formed of the cavities of the plurality of arranged constituent units U communicating with each other.

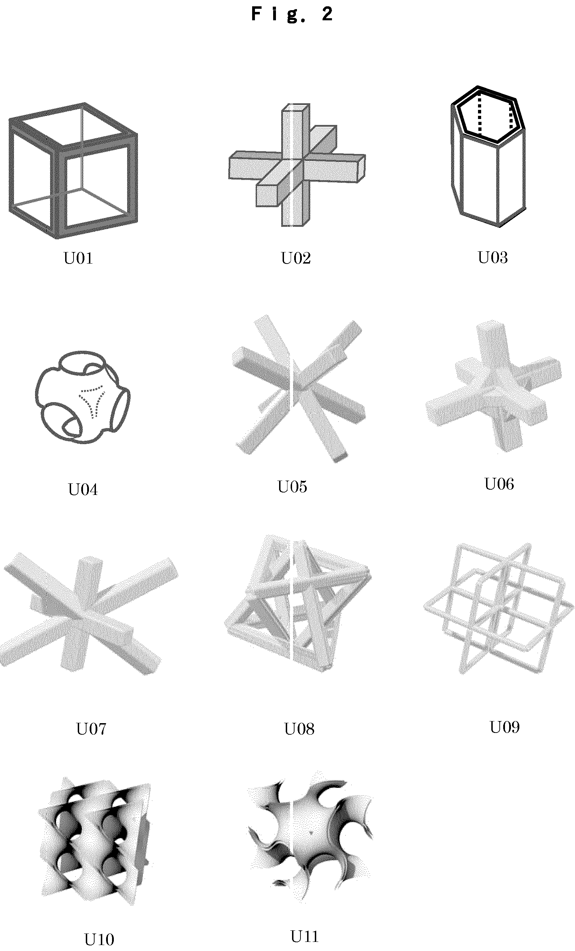

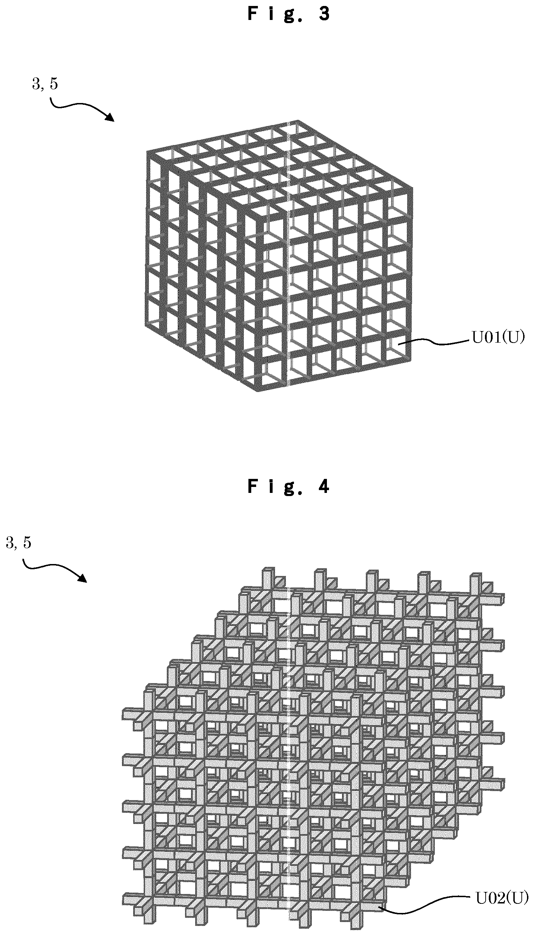

As shown in, for example, U01 and U02 of Fig. 2, each constituent unit U can have a cavity while having the structure with the plurality of bar-shaped members combined together. As shown in, for example, U01 of Fig. 2, the constituent unit U can have 12 bar-shaped members arranged to serve as the respective sides of a cuboid. The constituent unit U having this type of shape has a cavity formed among the bar-shaped members. When the constituent units U each having this type of shape are stacked on each other in a three-dimensional manner, the cavities of the plurality of constituent units communicate with each other, and the cavities communicating with each other form at least a part of the internal cavity of the resin structure 3 (see the three-dimensional grid structure shown in Fig. 3).

Alternatively, as shown in, for example, U02 of Fig. 2, each constituent unit U can have six bar-shaped members respectively extending in six different directions from the center of the constituent unit U. In the constituent unit U having this type of shape, the bar-shaped members adjacent to each other are orthogonal to each other. In other words, four bar-shaped members adjacent to one bar-shaped member extending in one direction from the center are each orthogonal to the one bar-shaped member extending in the one direction, and are 90 degrees away from each other. The remaining one bar-shaped member extends in a direction opposite to the one direction in which the one bar-shaped member extends. In the constituent unit U of this type, a cavity is formed among the six bar-shaped members. When the constituent units U each having this type of shape are stacked on each other in a three-dimensional manner, the cavities of the plurality of constituent units communicate with each other, and the cavities communicating with each other form at least a part of the internal cavity of the resin structure 3 (see Fig. 4).

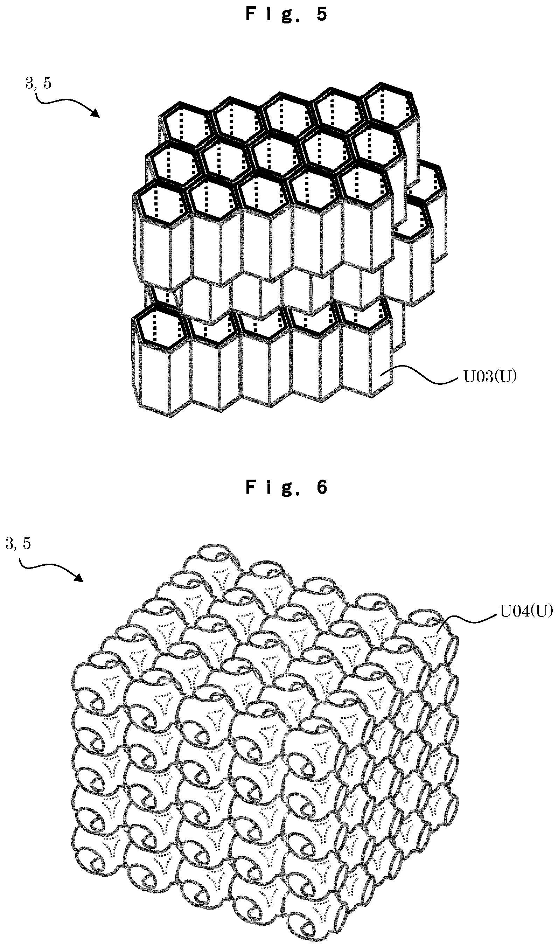

As shown in, for example, U03 of Fig. 2, each constituent unit U can have a cavity therein while having a structure with the plurality of plate-shaped members combined together. For example, the constituent unit U shown in U03 of Fig. 2 is formed of six plates, and has a cavity inside a hollow hexagonal prism. In the constituent unit U of this type, for example the six plates can form a structure with a cavity inside a regular hexagonal prism. A plurality of the constituent units U having this type of shape are combined together and arranged to bring side surfaces of each adjacent constituent units U into abutting contact with each other to thereby form a so-called honeycomb structure. In this case, the cavity inside the hexagonal prism structure forms at least a part of the internal cavity of the resin structure 3 (see Fig. 5). When one honeycomb structure formed by combining together a plurality of the constituent units U each having this type of shape is stacked on the other honeycomb structure in an axial direction of the hexagonal prism, the stacking can be performed to allow the internal cavity in each of the hexagonal prisms of the one honeycomb structure to communicate with the internal cavity in each of the hexagonal prisms of the other honeycomb structure. This configuration allows the internal cavity to communicate from one end to the other end of the resin structure 3 in the axial direction of the hexagonal prisms within the resin structure 3.

As shown in, for example, U04 of Fig. 2, each constituent unit U can have a structure with a curved surface continuously laid within the constituent unit (i.e., structure in which the constituent unit is formed of one curved surface), and have a cavity inside or outside the curved surface. Specifically, as shown in, for example, U04 of Fig. 2, the constituent unit U can have a Schwarz P surface structure, or a similar structure thereto. The constitutional unit U having this type of shape is formed of a curved surface embracing an internal cavity. In the constitutional unit U having this type of shape, a cavity inside the curved surface communicates with a cavity outside the curved surface. When a plurality the constitutional units U each having this type of shape are stacked on each other in a three-dimensional manner, the cavities inside the constitutional units U communicate with each other, and the communicating cavities form at least a part of the internal cavity of the resin structure 3 (see Fig. 6).

Further, the constituent unit U can have such a structure as shown in, for example, each of U05 to U11 of Fig. 2. U11 shows a constituent unit with the gyroid surface structure. The constituent unit U can have such a structure as a Schwarz G surface or a Schwarz D surface.

In the resin structure 3, the constituent units can all have the same shape, or some or all of the constituent units can have different shapes.

In the ultrasonic treatment step, the composition attached to the inner surface of the resin structure 3 fabricated as above is at least reduced by ultrasonic treatment. Specifically, the ultrasonic treatment is performed for the resin structure 3 fabricated as above in a state of being immersed in a solvent. This causes the foaming agent and the residue curable material having been uncured to be dissolved or dispersed in the solvent. Thus, the inner surface of the resin structure 3 can be cleaned.

In the ultrasonic treatment, at least an organic solvent is used as a solvent. A preferable organic solvent is a univalent alcohol. Examples of the univalent alcohol include methyl alcohol, ethyl alcohol, and isopropyl alcohol. The solvent can further include water. In the ultrasonic treatment, for example, an ultrasonic wave at 40 kHz and 100 w is applied to the resin structure 3 and the solvent. The duration of time of the ultrasonic treatment is, for example, 30 seconds or more and 5 minutes or less.

In the first blowing step, the fluid such as a liquid, a gas, or the like is applied or blown to the resin structure 3 fabricated as above. This can almost thoroughly remove the above composition attached to the inner surface of the resin structure 3. In other words, the excess foaming agent and curable material remaining inside the resin structure 3 can be almost thoroughly removed to clean the inner surface of the resin structure 3. If a relatively large amount of foaming agent remains near the inner surface of the resin structure 3, the curable material cannot suppress the foaming agent near the inner surface from expanding. This causes a likelihood of a significant volume expansion of the foaming agent in the internal cavity, resulting in a possible damage to the resin structure 3. In contrast, this embodiment in which the internal surface is cleaned by blowing the fluid can prevent the resin structure 3 from damage when the resin structure 3 is foamed in the subsequent resin foam product fabricating step.

When the cavities inside the resin structure 3 thoroughly or almost thoroughly communicate with the outer space, the pressure of the fluid blown to the one side of the resin structure 3 is sufficient to allow the fluid to reach the internal cavities formed on the other side of the resin structure 3. Thus, the inner surface of the resin structure 3 can be more sufficiently cleaned.

In the first blowing step, it is preferable that the fluid (e.g., air) be blown to a surface portion in which a larger number of internal cavities are formed, or to a surface portion in which a larger internal cavity is formed when the fluid is blown to the surface of the resin structure 3. This enables the pressure of the fluid to be more easily transmitted inside, and can thus efficiently clean even the inner surface in the surface portion opposite to the surface portion with the fluid blown thereto.

In the first blowing step, a gas is preferably employed as the fluid. In other words, a gas is preferably blown. This eliminates an operation of removing the blown fluid.

A preferably employed gas is air, particularly a dried gas. The pressure for blowing the gas is, for example, 0.1 MPa or more and 1.0 MPa or less.

In the secondary curing step, the resin structure 3 is further cured by, for example, heating the resin structure 3. The heating temperature is, for example, 60 °C or more and 120 °C or less. The duration of heating is, for example, 30 minutes or more and 2 hours or less. In the secondary curing step, the resin structure 3 is further cured by being irradiated with the active energy ray such as the ultraviolet ray. In the secondary curing step, one of the heating and the irradiation can be performed, or both of them can be performed. In the case where both of them are performed, the order of performing the heating and the irradiation is not particularly limited.

A step similar to the aforementioned ultrasonic treatment step can be performed before the secondary curing step.

In the resin foam product fabricating step, the resin structure 3 with its inner surface cleaned by blowing the fluid is subjected to foaming treatment to fabricate the resin foam product 5. The foaming treatment causes the foaming agent included in the resin structure 3 to expand. The expansion of the foaming agent causes the resin structure 3 to become the resin foam product 5.

In the foaming treatment, for example, the resin structure 3 is heated. The heating temperature in the foaming treatment is, for example, 150 °C or more and 220 °C or less. The heating duration in the foaming treatment is, for example, 5 minutes or more and 45 minutes or less. In the heating, for example, a method for heating in an oven or in a heating thermostatic bath, or a method for heating by irradiation with the active energy ray such as the infrared ray or µ waves can be employed.

In the second blowing step, the fluid is blown to the resin foam product 5 to clean the inner surface of the resin foam product 5. This can remove dirt or the like attached to the inner surface of the resin foam product 5. In particular, when the thermally expandable foaming agent is employed as the foaming agent, it is likely that the capsules remain after the foaming treatment, and a large amount of capsules are attached to the inner surface of the resin foam product 5. Thus, the second blowing step is particularly preferably performed when the aforementioned thermally expandable foaming agent is employed as the foaming agent.

In the second blowing step, a gas is preferably employed as the fluid. In other words, a gas is preferably blown to the resin foam product 5. The gas employed as the fluid to be blown eliminates an operation of removing the fluid attached to the resin foam product 5 after the second blowing step.

Since the cleaning of the inner surface of the resin foam product 5 in the second blowing step can be easier than the cleaning of the inner surface of the resin structure 3 in the first blowing step, the pressure of the gas to be blown to the resin structure 3 can be higher than the pressure of the gas to be blown to the resin foam product 5.

After the second blowing step, minute objects attached to the outer surface of the resin foam product 5 can be wiped off with, for example, cloth. This wiping can be performed with cloth impregnated with a liquid such as water or an organic solvent.

In the producing method of this embodiment, the resin foam product 5 having the internal cavity can be produced by carrying out the aforementioned steps. Moreover, the resin foam product 5 can be produced having the internal cavity in such a shape as being substantially reflected by the shape of the internal cavity formed inside the resin structure 3 before foaming. Thus, the resin foam product 5 having the internal cavity as designed can be obtained.

Next, a detailed description will be given on an embodiment of a resin foam product according to the present invention. The resin foam product 5 of this embodiment is used as, for example, a shoe sole member of a shoe 100 to be described later.

In one aspect, the resin foam product 5 of this embodiment is produced by, for example, the aforementioned method for producing the resin foam product. Specifically, the resin foam product 5 is a resin foam product with an internal cavity, the resin foam product produced by a method for producing a resin foam product including: a step of preparing a composition including a curable material and a foaming agent; a step of forming a resin structure 3 with an internal cavity communicating with the outer space by curing the composition; a step of blowing a fluid to the resin structure 3; and a step of fabricating the resin foam product 5 by foaming the resin structure 3 with the fluid blown thereto. In the resin foam product of this embodiment, the internal cavity as designed is formed.

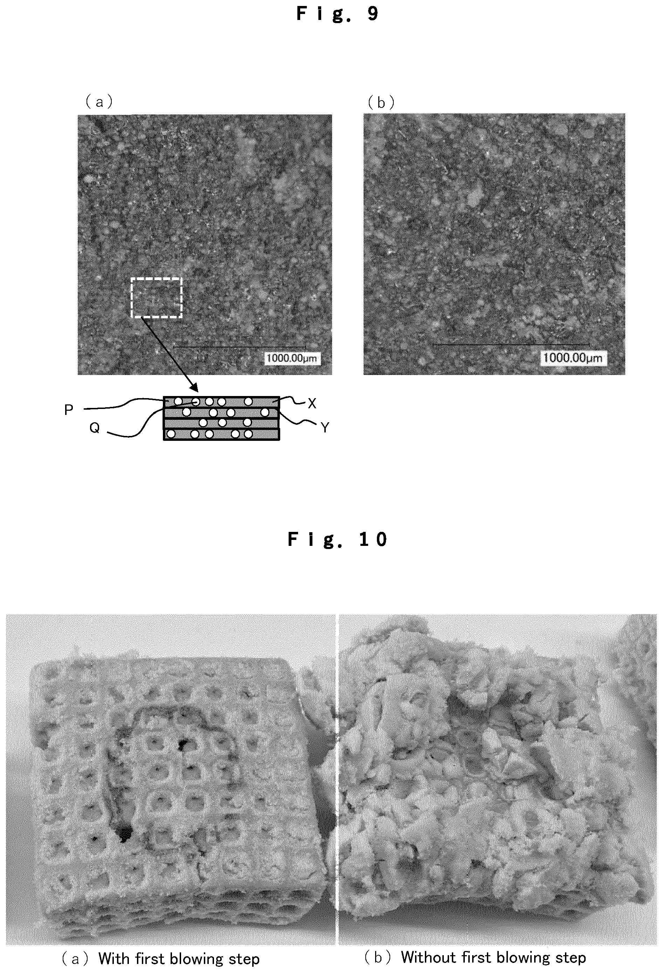

As aforementioned, the resin foam product 5 of this embodiment is produced by foaming the resin structure 3 with the internal cavity. When a foamed product having a three-dimensional shape is produced, the foaming is generally performed within a mold to obtain a foamed product having a desired shape. When the resin foam product is produced by foaming a resin structure with an internal cavity, it is possible to form a resin foam product having a desired outer surface shape within a mold, but it is impossible to foam the resin structure while having a mold disposed with its surface conforming to the entire inner surface of the resin structure. In many cases, therefore, it is difficult to produce a resin foam product having an internal cavity formed as desired even if a resin structure with a desired internal cavity is foamed. Specifically, at the time of foaming the resin structure, the foaming agent within the resin structure expands to increase the volume of the resin structure. In association therewith, at least a part of an uncured composition (including the foaming agent) attached to the inner surface of the resin structure bulges or the like toward the internal cavity. Since it is impossible to dispose a mold with its surface conforming to the entire inner surface of the resin structure, it is impossible to suppress the phenomenon in which the uncured composition attached to the inner surface of the resin structure bulges or the like as above to fill the internal cavity. The resin foam product of this embodiment is, in contrast, produced with the step of blowing the fluid to the resin structure 3 having the internal cavity as described above. That is, the resin foam product of this embodiment is produced by cleaning the inner surface of the resin structure 3 with the internal cavity through the blowing of the fluid, followed by foaming the resin structure 3. However, no resin foam product with a desired internal cavity can be obtained without the step of blowing the fluid to the resin structure (see (b) of Fig. 10). Since it is remarkably difficult to produce the resin foam product with the desired internal cavity without the above first blowing step, it is thought to be difficult to specify the characteristics of the resin foam product with the desired internal cavity without the matter of the first blowing step. In other words, since the characteristics of the resin foam product with the desired internal cavity are closely and inseparably associated with the above first blowing step, the above first blowing step is thought to be essential to obtain the configuration of the resin foam product of this embodiment.

The resin foam product 5 produced as above has a similar shape to the shape of the aforementioned resin structure 3. However, the resin foam product 5 has a larger size than that of the resin structure 3 due to the foaming. Similar to the resin structure 3, the resin foam product 5 has the internal cavity communicating with the outer space, as shown in, for example, Fig. 3 to Fig. 6. The constituent unit of the resin foam product 5 is larger than the constituent unit of the resin structure 3, but still has a similar shape to that of the constituent unit of the resin structure 3 before the foaming treatment.

In another aspect, the resin foam product 5 of this embodiment is, for example, a resin foam product with an internal cavity, and in a cross section of the resin foam product 5 along any plane out of three planes (virtual planes) orthogonal to one another, a band area including a resin portion and a bubble portion and a linear area including a resin portion only are alternately and repeatedly layered on each other.

For example, in the cross section of the resin foam product 5 along any plane out of the three planes orthogonal to one another, a plurality of the band areas respectively having longitudinal axes substantially parallel to each other while being disposed in a direction substantially orthogonal to the longitudinal axes, and a plurality of the linear areas each being thinner than each of the plurality of band areas are observed by, for example, a microscope, and the plurality of band areas and the plurality of linear areas are alternately and repeatedly stacked on each other. Each of the plurality of band areas includes a plurality of the resin portions and a plurality of the bubble portions. The plurality of resin portions are intermittently arranged along a direction of the longitudinal axes (hereinafter referred to as longitudinal direction), and the plurality of bubble portions are disposed between the resin portions adjacent to each other along the longitudinal direction.

As is evident from an observed image of the cross section, layers respectively viewed as the plurality of band areas and layers respectively viewed as the plurality of linear areas in the cross section are alternately layered on each other inside the resin foam product 5 produced using the 3D printer. Specifically, when the resin structure 3 is formed using the 3D printer in the resin structure forming step, the formed resin structure 3 has an internal structure in which layers of the cured product of the above composition are stacked on each other. In other words, the fabricated resin structure 3 is formed by stacking the layers of the cured product obtained by curing the composition. When the resin structure 3 is formed using the 3D printer while, for example, the liquid composition including the curable material is irradiated with the active energy ray, portions irradiated with the active energy ray are cured. In the SLA method using the 3D printer, the active energy ray is irradiated on the composition while moving the irradiation destination along a horizontal direction. In the DLP method, in contrast, the active energy ray is irradiated entirely on a surface to be shaped within the composition. In any of these methods, the composition is cured by the irradiation in a plane area; thus, portions of the resin structure 3 (i.e., bulk portions, solid portions) are formed into layers. Then, the irradiation continues while moving the surface to be shaped in a shaping direction (i.e., stacking direction of the layers) of the resin structure 3 to thereby obtain layered products of the cured composition to form the resin structure 3 in a three-dimensional shape. Thus, a trace in which the surface to be shaped has moved is formed on at least a part of the resin structure 3.

When, in particular, the thermally-expandable foaming agent is used as the foaming agent to form the resin structure 3 using the 3D printer as described above, the inside of the resin foam product 5 is observed to have such a structure as a plurality of layers stacked on each other as below by an optical microscope, an electronic microscope, or the like at a magnification of about 100 times. Specifically, as in the microscope observation image shown in, for example, (a) of Fig. 9, a stripe pattern including a plurality of band areas X respectively having longitudinal axes substantially parallel to each other while being disposed in a direction substantially orthogonal to the longitudinal axes is observed in at least a part of the cross section obtained by cutting the resin foam product 5 along the shaping direction (i.e., a cross section perpendicular to the plane direction of the layers). Each of the plurality of band areas X observed to be lighter (i.e., have a higher brightness) in the stripe pattern is a layer including at least the cured product of the curable material and bubbles. In contrast, each of a plurality of linear areas Y observed to be darker (i.e., have a lower brightness) between each adjacent ones of the plurality of band areas X is a layer including at least the cured product of the curable material and no bubbles, and is thinner than each of the plurality of band areas X. In other words, observed is such a stripe pattern as to be obtained by alternately stacking, in one direction, the plurality of band areas X that each look brighter and the plurality of linear areas Y that each look darker between each adjacent ones of the plurality of band areas X. In the cross section along the shaping direction, for example, the width of each of the band areas X can be 1 µm or more, can be 5 µm or more, or can be 10 µm or more. For example, the width of each of the band areas X can be 1000 µm or less, 500 µm or less, or can be 200 µm or less.

A more detailed observation of each of the plurality of band areas X finds that cured portions (resin portions P) are intermittently arranged from one side to the other in the longitudinal direction of the band area X. In other words, portions (bubble portions Q) in which bubbles are formed by the expansion of the foaming agent are present between the resin portions P along the longitudinal direction of the band area X. Further in other words, the resin portions P are separated in the longitudinal direction of the band area X by the bubble portions Q formed by the foaming. The resin portions P include at least the cured product of the curable material, and can further include various additives or the like. The bubble portions Q have at least pores generated by the foaming, and have the thermoplastic resin capsules in addition to the pores if the thermally-expandable foaming agent is employed as the foaming agent. That is, the resin portions P arranged along the longitudinal direction are separated by the pores or the thermoplastic resin capsules.

In contrast, as shown in (b) of Fig. 9, no such stripe pattern as above is observed in a cross section obtained by cutting the resin foam product 5 along the aforementioned layers. The stripe pattern of this type cannot be observed in the cross section along the layers, but can be observed in other cross sectional surfaces. For example, the stripe pattern as above can be observed in a cross section obtained by cutting the resin foam product 5 in a thickness direction of the layers even if the cross section is not perpendicular to the plane direction of the layers.

In the optical shaping method using the 3D printer, the duration of time required for forming an optically shaped article generally tends to depend on the dimension thereof in the shaping direction (i.e., length in the stacking direction of the layers). In other words, the larger the dimension in the shaping direction, the longer the duration of time required for shaping tends to be. The resin structure 3 having at least a part formed in the layered structure as above has a higher expansion ratio in the shaping direction (i.e., stacking direction of the layers) than the expansion ratios in other directions. Since the expansion ratio of the resin structure 3 is higher in the shaping direction (i.e., stacking direction of the layers), it is easy to make small the dimension in the shaping direction of the resin structure 3 for obtaining the resin foam product 5 having a desired dimension in the shaping direction. Thus, the resin structure 3 made to have a smaller dimension in the shaping direction can make shorter the duration of time required for its optical shaping.

Next, a description will be given on one embodiment of a shoe according to the present invention with reference to the drawings. The shoe 100 of this embodiment includes a plate body of the resin foam product 5 in, for example, a shoe sole portion. In other words, for example, the aforementioned resin foam product 5 has a plate shape, and is used as a shoe sole member 10 of the shoe 100 of this embodiment. The shoe 100 of this embodiment includes the aforementioned resin foam product 5 with an internal cavity formed as designed.

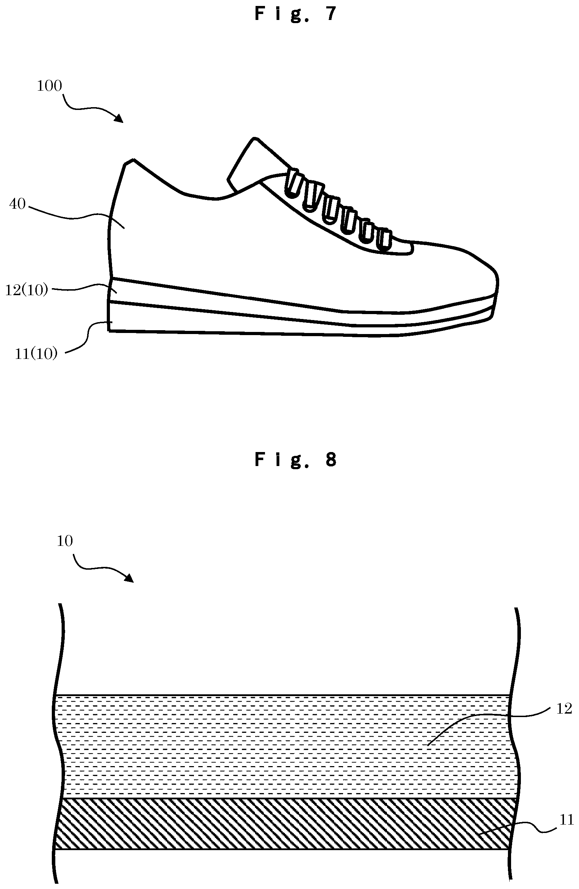

As shown in, for example, Fig. 7, the shoe 100 of this embodiment includes an upper 40 and the shoe sole member 10. The shoe sole member 10 includes an outsole 11 disposed on the bottom of the shoe, and a midsole 12 disposed closer to the bottom of a foot of a wearer than the outsole 11. Each figure in the drawings is a schematic view, and is not necessarily depicted to represent the ratios between the vertical and horizontal lengths of the actual parts and members.

The plate body of the aforementioned resin foam product 5 is the midsole 12 as shown in, for example, Fig. 8. The plate body of the resin foam product 5 can form the entire midsole, or can form a part of the midsole. The shoe 100 can include the resin foam product 5 with its outer surface exposed on the side or the bottom of the shoe 100. No outer surface of the resin foam product 5 can be exposed on the side or the bottom of the shoe 100.

The thickness of the plate-shaped resin foam product is not particularly limited, and can be, for example, 1 mm to 20 mm.

The shoe 100 including the plate-shaped resin foam product 5 as produced above as the shoe sole member 10 is, for example, used for an application as a sport shoe. Alternatively, the aforementioned shoe 100 can be, for example, used for an application as a sneaker.

The resin foam product, the shoe including the resin foam product, and the method for producing the resin foam product according to this embodiment have been exemplified as above, but the present invention shall not be limited to the resin foam product, the shoe including the resin foam product, and the method for producing the resin foam product as exemplified above. That is, various general forms used for the resin foam product, the shoe including the resin foam product, and the method for producing the resin foam product can be employed without impairing the effect of the present invention.

The disclosure herein includes the following matters:
(1) A method for producing a resin foam product with an internal cavity, the method including:
   a step of preparing a composition including a curable material and a foaming agent;
   a step of forming a resin structure with an internal cavity communicating with an outer space by curing the composition;
   a step of blowing a fluid to the resin structure; and
   a step of fabricating the resin foam product by foaming the resin structure with the fluid blown thereto.
(2) The method according to (1) above, in which
   the curable material is a photocurable material in a liquid form, and
   in the step of forming the resin structure, the composition is cured by being irradiated with an active energy ray.
(3) The method according to (1) or (2) above, further including: a step of further curing the resin structure after the step of blowing the fluid to the resin structure and before the step of fabricating the resin foam product.
(4) The method according to any one of (1) to (3) above, in which the foaming agent is a thermally-expandable foaming agent.
(5) The method according to any one of (1) to (4) above, in which the resin foam product includes outer surface portions respectively on one side and an other side with a center of the resin foam product located therebetween, and
   at least a part of an internal cavity in the outer surface portion on the one side communicates with an internal cavity in the outer surface portion on the other side.
(6) The method according to any one of (1) to (5), in which the internal cavities within the resin foam product entirely communicate with the outer space.
(7) The method according to any one of (1) to (6), in which the resin foam product includes a plurality of constituent units continuously arranged along at least one direction,
   each of the plurality of constituent units is configured of a structure with a plurality of bar-shaped members or plate-shaped members combined together, or is configured of a structure with a curved surface continuously laid within the each of the plurality of constituent units.
(8) The method according to any one of (1) to (7) above, further including: a step of blowing a fluid to the resin foam product after the step of fabricating the resin foam product.
(9) The method according to (8) above, in which the fluid is a gas in the step of blowing the fluid to the resin structure,
   the fluid is a gas in the step of blowing the fluid to the resin foam product, and
   in the step of blowing the fluid to the resin structure, the fluid is blown at a higher pressure than a pressure at which the fluid is blown in the step of blowing the fluid to the resin foam product.
(10) The method according to any one of (1) to (9) above, further including: a step of subjecting the resin structure in a state of being immersed in a solvent to ultrasonic treatment, between the step of forming the resin structure and the step of blowing the fluid to the resin structure.
(11) A resin foam product with an internal cavity, the resin foam product produced by a method of producing a resin foam product including:
   a step of preparing a composition including a curable material and a foaming agent;
   a step of forming a resin structure with an internal cavity communicating with an outer space by curing the composition;
   a step of blowing a fluid to the resin structure; and
   a step of fabricating the resin foam product by foaming the resin structure with the fluid blown thereto.
(12) A resin foam product with an internal cavity, in which
   in a cross section of the resin foam product along any one of three planes orthogonal to one another, a band area including a resin portion and a bubble portion and a linear area including only a resin portion are alternately and repeatedly layered on each other.
(13) A shoe including the resin foam product according to (11) or (12) above.

### EXAMPLES

Next, a further detailed description will be given on the present invention by way of examples, but the present invention shall not be limited thereto.

A resin foam product was produced as follows. The materials for producing the resin foam product, and the mixing ratio of the composition for forming the resin structure are shown below.

### <Material for resin structure (resin foam product)>

(1) Curable material: 100 mass parts
   Urethane acrylate-based monomer (viscosity at room temperature: 800 mPa·s)
(2) Photopolymerization initiator: 20 mass parts
   Product name: "EXPANCEL 920DU120" (manufactured by Japan Fillite co., ltd.)

### <Resin structure forming step>

Using a 3D printer, the composition in a liquid form under ordinary temperature including the curable material and the photopolymerization initiator as above was irradiated with ultraviolet laser beams (wavelength of 40 nm, 40 w) to fabricate a plate-shaped resin structure having a specific structure (i.e., three-dimensional grid structure).

### <Ultrasonic treatment step>

The fabricated resin structure in a state of being immersed in a liquid (isopropyl alcohol) was subjected to ultrasonic treatment (at 40 kHz, 100 w) for a minute. Thereafter, the resin structure was taken out of the liquid, and the liquid was wiped off.

### <First blowing step>

Air was blown to the resin structure at a pressure of 0.3 MPa. That is, adhering matters or the like adhering to, for example, the inner surface of the resin structure were removed by airblow.

### <Secondary curing step>

Each of the front and back sides of the air-blown resin structure was irradiated with the ultraviolet ray at a wavelength of 400 nm and 60 w for 10 minutes. Further, the resin structure was heated at 80 °C for 60 minutes to further cure the resin structure.

### <Resin foam product fabricating step>

The resin structure subjected to the secondary curing was heated at 160 °C for 15 minutes to foam the resin structure, thereby obtaining the resin foam product.

### <Second blowing step>

Air was blown to the resin foam product at a pressure of 0.2 MPa. That is, adhering matters or the like adhering to the outer surface and the inner surface of the resin foam product were removed by airblow.

As described above, the resin foam product was produced by the method as the example. Further, another resin foam product was produced by a method as a comparative example, which was the same as the aforementioned method except that the step of blowing air to the resin structure was not carried out. The resin foam products produced by the method as the example and by the method as the comparative example are shown respectively as (a) and (b) of Fig. 10.

As is understood from (a) and (b) of Fig. 10, the resin foam product produced by the method as the example had the desired internal cavity formed as designed. On the other hand, the resin foam product produced by the method as the comparative example was damaged by excessive volume expansion caused by the remaining foaming agent in the internal cavity.

### Industrial Applicability

The method for producing the resin foam product of the present invention is, for example, suitably used for producing the shoe sole member disposed on the bottom of the shoe for use. The resin foam product of the present invention is, for example, suitably used for the application of the shoe sole member disposed on the bottom of the shoe for use. The shoe of the present invention is, for example, suitably used for the application of the sport shoe.

### REFERENCE SIGNS LIST

3: Resin structure
5: Resin foam product
U: Constituent unit
X: Band area
Y: Linear area
P: Resin portion
Q: Bubble portion
10: Shoe sole member
11: Outsole
12: Midsole
40: Upper
100: Shoe

Provided for example is a method for producing a resin foam product with an internal cavity, the method including: a step of preparing a composition including a curable material and a foaming agent; a step of forming a resin structure with an internal cavity communicating with an outer space by curing the composition; a step of blowing a fluid to the resin structure; and a step of fabricating the resin foam product by foaming the resin structure with the fluid blown thereto.

## Claims

1. A method for producing a resin foam product (5) with an internal cavity, the method comprising:
a step (S101) of preparing a composition comprising a curable material and a foaming agent;
a step (S102) of forming a resin structure (3) with an internal cavity communicating with an outer space by curing the composition;
a step (S103) of blowing a fluid to the resin structure (3); and
a step (S104) of fabricating the resin foam product (5) by foaming the resin structure (3) with the fluid blown thereto.

2. The method according to claim 1, wherein
the curable material is a photocurable material in a liquid form, and
in the step (S102) of forming the resin structure (3), the composition is cured by being irradiated with an active energy ray.

3. The method according to claim 2, further comprising:
a step (S120) of further curing the resin structure (3) after the step of blowing the fluid to the resin structure (3) and before the step of fabricating the resin foam product (5).

4. The method according to any one of claims 1 to 3, wherein the foaming agent is a thermally-expandable foaming agent.

5. The method according to any one of claims 1 to 4, wherein
the resin foam product (5) comprises outer surface portions respectively on one side and an other side with a center of the resin foam product (5) located therebetween, and
at least a part of an internal cavity in the outer surface portion on the one side communicates with an internal cavity in the outer surface portion on the other side.

6. The method according to any one of claims 1 to 5, wherein the internal cavities within the resin foam product (5) entirely communicate with the outer space.

7. The method according to any one of claims 1 to 6, wherein
the resin foam product (5) comprises a plurality of constituent units (U) continuously arranged along at least one direction,
each of the plurality of constituent units (U) is configured of a structure with a plurality of bar-shaped members or plate-shaped members combined together, or is configured of a structure with a curved surface continuously laid within the each of the plurality of constituent units (U).

8. The method according to any one of claims 1 to 7, further comprising: a step (S130) of blowing a fluid to the resin foam product (5) after the step (S104) of fabricating the resin foam product (5).

9. The method according to claim 8, wherein
the fluid is a gas in the step (S103) of blowing the fluid to the resin structure (3),
the fluid is a gas in the step (S130) of blowing the fluid to the resin foam product (5), and
in the step (S103) of blowing the fluid to the resin structure (3), the fluid is blown at a higher pressure than a pressure at which the fluid is blown in the step (S130) of blowing the fluid to the resin foam product (5).

10. The method according to any one of claims 1 to 9, further comprising: a step (S110) of subjecting the resin structure (3) in a state of being immersed in a solvent to ultrasonic treatment, between the step (S102) of forming the resin structure (3) and the step (S103) of blowing the fluid to the resin structure (3).

11. A resin foam product (5) with an internal cavity, the resin foam product (5) produced by a method of producing a resin foam product (5) comprising:
a step (S101) of preparing a composition comprising a curable material and a foaming agent;
a step (S102) of forming a resin structure (3) with an internal cavity communicating with an outer space by curing the composition;
a step (S103) of blowing a fluid to the resin structure (3); and
a step (S104) of fabricating the resin foam product (5) by foaming the resin structure (3) with the fluid blown thereto.

12. A shoe (100) comprising the resin foam product (5) according to claim 11.

## Patentansprüche

1. Verfahren zum Produzieren eines Harzschaumprodukts (5) mit einem Innenhohlraum, wobei das Verfahren aufweist:
einen Schritt (S101) eines Bereitstellens einer Zusammensetzung, die ein aushärtbares Material und ein Schäummittel aufweist;
einen Schritt (S102) eines Ausbildens einer Harzstruktur (3) mit einem Innenhohlraum, der mit einem Außenraum in Verbindung ist, durch Aushärten der Zusammensetzung;
einen Schritt (S103) eines Blasens eines Fluids zu der Harzstruktur (3); und
einen Schritt (S104) eines Fertigens des Harzschaumprodukts (5) durch Schäumen der Harzstruktur (3) mit dem zu dieser geblasenen Fluid.

2. Verfahren gemäß Anspruch 1, wobei
das aushärtbare Material ein lichtaushärtbares Material in einer flüssigen Form ist, und
bei dem Schritt (S102) eines Ausbildens der Harzstruktur (3) die Zusammensetzung ausgehärtet wird, indem sie mit einem Aktivenergiestrahl bestrahlt wird.

3. Verfahren gemäß Anspruch 2, das ferner aufweist:
einen Schritt (S120) eines weiteren Aushärtens der Harzstruktur (3) nach dem Schritt eines Blasens des Fluids zu dem Harzaufbau (3) und vor dem Schritt eines Fertigens des Harzschaumprodukts (5).

4. Verfahren gemäß einem der Ansprüche 1 bis 3, wobei das Schäummittel ein thermisch ausdehnbares Schäummittel ist.

5. Verfahren gemäß einem der Ansprüche 1 bis 4, wobei
das Harzschaumprodukt (5) Außenflächenabschnitte jeweils an einer Seite und an einer anderen Seite aufweist, wobei ein Zentrum des Harzschaumprodukts (5) dazwischenliegt, und
mindestens eine Partie eines Innenhohlraums in dem Außenflächenabschnitt an der einen Seite mit einem Innenhohlraum in dem Außenflächenabschnitt an der anderen Seite in Verbindung ist.

6. Verfahren gemäß einem der Ansprüche 1 bis 5, wobei die Innenhohlräume innerhalb des Harzschaumprodukts (5) vollständig mit dem Außenraum in Verbindung sind.

7. Verfahren gemäß einem der Ansprüche 1 bis 6, wobei
das Harzschaumprodukt (5) eine Vielzahl Haupteinheiten (U) aufweist, die durchgängig entlang mindestens einer Richtung angeordnet sind,
jede der Vielzahl Haupteinheiten (U) aus einer Struktur mit einer Vielzahl stabförmiger Elemente oder plattenförmiger Elemente, die zusammen kombiniert sind, gestaltet ist oder aus einer Struktur mit einer gekrümmten Fläche gestaltet ist, die durchgängig innerhalb jeder der Vielzahl Haupteinheiten (U) gelegt ist.

8. Verfahren gemäß einem der Ansprüche 1 bis 7, das ferner aufweist: einen Schritt (S130) eines Blasens eines Fluids zu dem Harzschaumprodukt (5) nach dem Schritt (S104) eines Fertigens des Harzschaumprodukts (5).

9. Verfahren gemäß Anspruch 8, wobei
das Fluid bei dem Schritt (S103) eines Blasens des Fluids zu der Harzstruktur (3) ein Gas ist,
das Fluid bei dem Schritt (S130) eines Blasens des Fluids zu dem Harzschaumprodukt (5) ein Gas ist, und
bei dem Schritt (S103) eines Blasens des Fluids zu der Harzstruktur (3) das Fluid bei einem höheren Druck geblasen wird als einem Druck, bei dem das Fluid bei dem Schritt (S130) eines Blasens des Fluids zu dem Harzschaumprodukt (5) geblasen wird.

10. Verfahren gemäß einem der Ansprüche 1 bis 9, das ferner aufweist: einen Schritt (S110) eines Unterziehens der Harzstruktur (3) in einem Zustand eines Eingetauchtseins in einer Lösung einer Ultraschallbehandlung, zwischen dem Schritt (S102) eines Ausbildens der Harzstruktur (3) und dem Schritt (S103) eines Blasens des Fluids zu der Harzstruktur (3).

11. Harzschaumprodukt (5) mit einem Innenhohlraum, wobei das Harzschaumprodukt (5) durch ein Verfahren eines Produzierens eines Harzschaumprodukts (5) produziert ist, das aufweist:
einen Schritt (S101) eines Bereitstellens einer Zusammensetzung, die ein aushärtbares Material und ein Schäummittel aufweist;
einen Schritt (S102) eines Ausbildens einer Harzstruktur (3) mit einem Innenhohlraum, der mit einem Außenraum in Verbindung ist, durch Aushärten der Zusammensetzung;
einen Schritt (S103) eines Blasens eines Fluids zu der Harzstruktur (3); und
einen Schritt (S104) eines Fertigens des Harzschaumprodukts (5) durch Schäumen der Harzstruktur (3) mit dem zu dieser geblasenen Fluid.

12. Schuh (100), der das Harzschaumprodukt (5) gemäß Anspruch 11 aufweist.

## Revendications

1. Procédé de production d'un produit en mousse de résine (5) doté d'une cavité interne, le procédé comprenant :
une étape (S101) de préparation d'une composition comprenant un matériau durcissable et un agent moussant ;
une étape (S102) de formation d'une structure de résine (3) dotée d'une cavité interne communiquant avec un espace externe par durcissement de la composition ;
une étape (S103) de soufflage d'un fluide sur la structure de résine (3) ; et
une étape (S104) de fabrication du produit en mousse de résine (5) par moussage de la structure de résine (3) avec le fluide soufflé dessus.

2. Procédé selon la revendication 1, dans lequel
le matériau durcissable est un matériau photodurcissable sous forme liquide, et
dans l'étape (S102) de formation de la structure de résine (3), la composition est durcie en étant exposée à un rayon d'énergie active.

3. Procédé selon la revendication 2, comprenant en outre :
une étape (S120) de durcissement supplémentaire de la structure de résine (3) après l'étape de soufflage du fluide sur la structure de résine (3) et avant l'étape de fabrication du produit en mousse de résine (5).

4. Procédé selon l'une quelconque des revendications 1 à 3, dans lequel l'agent moussant est un agent moussant thermoexpansible.

5. Procédé selon l'une quelconque des revendications 1 à 4, dans lequel
le produit en mousse de résine (5) comprend des parties de surface externe respectivement sur un côté et sur un autre côté, un centre du produit en mousse de résine (5) étant situé entre elles, et
au moins une partie d'une cavité interne dans la partie de surface externe sur un côté communique avec une cavité interne dans la partie de surface externe sur l'autre côté.

6. Procédé selon l'une quelconque des revendications 1 à 5, dans lequel les cavités internes à l'intérieur du produit en mousse de résine (5) communiquent entièrement avec l'espace externe.

7. Procédé selon l'une quelconque des revendications 1 à 6, dans lequel
le produit en mousse de résine (5) comprend une pluralité d'unités constitutives (U) disposées en continu le long d'au moins une direction,
chaque unité de la pluralité d'unités constitutives (U) est configurée d'une structure avec une pluralité d'éléments en forme de barre ou d'éléments en forme de plaque combinés ensemble, ou est configurée d'une structure avec une surface incurvée disposée en continu à l'intérieur de chaque unité de la pluralité d'unités constitutives (U).

8. Procédé selon l'une quelconque des revendications 1 à 7, comprenant en outre : une étape (S130) de soufflage d'un fluide sur le produit en mousse de résine (5) après l'étape (S104) de fabrication du produit en mousse de résine (5).

9. Procédé selon la revendication 8, dans lequel
le fluide est un gaz dans l'étape (S103) de soufflage du fluide sur la structure de résine (3),
le fluide est un gaz dans l'étape (S130) de soufflage du fluide sur le produit en mousse de résine (5), et
dans l'étape (S103) de soufflage du fluide sur la structure de résine (3), le fluide est soufflé à une pression supérieure à la pression à laquelle le fluide est soufflé dans l'étape (S130) de soufflage du fluide sur le produit de mousse de résine (5).

10. Procédé selon l'une quelconque des revendications 1 à 9, comprenant en outre : une étape (S110) de soumission, à un traitement ultrasonique, de la structure de résine (3) dans un état d'immersion dans un solvant, entre l'étape (S102) de formation de la structure de résine (3) et l'étape (S103) de soufflage du fluide sur la structure de résine (3).

11. Produit de mousse de résine (5) doté d'une cavité interne, le produit de mousse de résine (5) produit par un procédé de production d'un produit de mousse de résine (5) comprenant :
une étape (S101) de préparation d'une composition comprenant un matériau durcissable et un agent moussant ;
une étape (S102) de formation d'une structure de résine (3) dotée d'une cavité interne communiquant avec un espace externe par durcissement de la composition ;
une étape (S103) de soufflage d'un fluide sur la structure de résine (3) ; et
une étape (S104) de fabrication du produit en mousse de résine (5) par moussage de la structure de résine (3) avec le fluide soufflé dessus.

12. Chaussure (100) comprenant le produit en mousse de résine (5) selon la revendication 11.
